# EUROPÄISCHE PATENTSCHRIFT

(11) **EP 1 635 092 B1**
(45) Veröffentlichungstag und Bekanntmachung des Hinweises auf die Patenterteilung: **20.07.2011**
(21) Anmeldenummer: 04104330.8
(22) Anmeldetag: 08.09.2004
(51) Int. Cl.: F16H 61/28, F16H 61/02, F16H 63/30

(54) **Hydraulische Steuerungsvorrichtung für eine Schaltgabel in einem Schaltgetriebe**
Hydraulic control device for a shifting fork in a transmission
Dispositif hydraulique de contrôle pour une fourchette dans une boîte de vitesses

(43) Veröffentlichungstag der Anmeldung: 15.03.2006
(73) Patentinhaber: Getrag Ford Transmissions GmbH, 50725 Köln (DE)
(72) Erfinder: Möhlmann, Reinhard, 50739, Köln (DE)

(56) Entgegenhaltungen:
- EP-A- 0 417 657
- DE-A1- 4 208 060
- DE-A1- 10 134 115
- DE-A1- 10 149 527
- DE-C1- 4 117 736
- GB-A- 2 163 224
- US-A- 4 846 050

## Beschreibung

Die Erfindung betrifft eine hydraulische Steuerungsvorrichtung für eine Schaltgabel zum Einlegen/Auslegen wenigstens eines Ganges in einem Schaltgetriebe.

Beispielsweise ist aus der DE 101 34 115 A1 eine hydraulische Steuerungsvorrichtung bekannt, die einen doppelt-wirkenden Schaltzylinder mit zwei Kammern sowie eine Kolbeneinheit umfasst, die die Schaltgabel führt. Den Kammern ist dabei ein Regelventil zum Erzeugen eines moderierten Druckes vorgeschaltet. Durch Beaufschlagung einer der Kammern mit dem Druck des Regelventils lässt sich die Kolbeneinheit und damit die Schaltgabel verschieben. Dabei wird das Volumen der mit dem Druck des Regelventils beaufschlagten Kammer größer, während das Volumen der anderen Kammer kleiner wird und das in letztgenannter Kammer befindliche Öl in einen Ölsumpf gelangt.

Bei dem oben beschriebenen Schaltzylinder tritt das Problem auf, dass die Kolbeneinheit beim Übergang von einer Ruhestellung in eine Bewegung ruckelt beziehungsweise sich nicht gleichmäßig in Bewegung setzt. Zurückzuführen ist dieser Effekt auf den Übergang von Haftreibung zu Gleitreibung zwischen dem Schaltzylinder und der Kolbeneinheit. Da der Haftreibungskoeffizient größer ist als der Gleitreibungskoeffizient, bedarf es einer größeren Kraft, die Kolbeneinheit in Bewegung zu setzen, als die Gleitreibung zu überwinden. Daher muss in einer der Kammern zunächst ein großer Druck aufgebaut werden, um die Kolbeneinheit in Bewegung zu versetzen. Ist der für das Anfahren der Kolbeneinheit notwendige Druck erreicht, setzt sich die Kolbeneinheit daher sprunghaft in Bewegung. Ein sanftes Anfahren der Kolbeneinheit stellt daher hohe Anforderungen an die hydraulische Steuerungsvorrichtung bzw. an das den Kammern vorgeschaltete Regelventil.

Die gattungsmäßige EP 0 417 657 A1 zeigt eine hydraulische Steuerungsvorrichtung mit einem doppelt-wirkenden Zylinder, der eine Kolbeneinheit und zwei Kammern umfasst. Für die beiden Kammern weist die Kolbeneinheit dabei unterschiedlich große wirksame Kolbenoberflächen auf. Die Steuerungsvorrichtung umfasst des Weiteren drei Schaltventile, mit denen man die Kammern mit einem Regelventil verbinden kann. In einem ersten Schaltzustand der drei Schaltventile werden beide Kammern gleichzeitig mit dem Regelventil verbunden, wobei die Kolbeneinheit bedingt durch die unterschiedlichen wirksamen Kolbenoberflächen in eine erste Richtung verschoben wird. In einem zweiten Schaltzustand wird nur eine Kammer mit dem Regelventil verbunden, während die andere Kammer drucklos gestellt wird und mit einem Öltank verbunden wird. Dadurch lässt sich die Kolbeneinheit in eine entgegen gesetzte Richtung bewegen. Insbesondere ein sanftes Anfahren der Kolbeneinheit in diese entgegengesetzte Richtung stellt, wie weiter oben bereits ausgeführt, hohe Anforderungen an die hydraulische Steuerungsvorrichtung.

Der Erfindung liegt die Aufgabe zugrunde, eine hydraulische Steuerungsvorrichtung bereitzustellen, bei der durch vergleichsweise einfache Mittel ein sanftes Anfahren der Kolbeneinheit möglich ist.

Die der Erfindung zugrundeliegende Aufgabe wird durch die Merkmale des kennzeichnenden Teils des Anspruchs 1 gelöst. Eine Ventilvorrichtung sorgt für einen Gegendruck, der der Bewegung, die durch die Beaufschlagung der Kolbeneinheit mit dem modellierten Druck des Regelventils verursacht wird, entgegenwirkt. Der Gegendruck verhindert, dass beim Übergang von Haft- zu Gleitreibung die Kolbeneinheit ruckelt und ermöglicht eine bessere Steuerbarkeit der Kolbeneinheit. Erfindungsgemäß ist der Schaltzylinder als doppelt-wirkender Schaltzylinder mit zwei Kammern ausgebildet, wobei jeweils eine Kammer mit dem modellierten Druck beaufschlagbar ist, während für die jeweils andere Kammer der Gegendruck durch die Ventilvorrichtung vorgegeben wird.

Vorzugsweise ist ein Kammerauswahlventil vorgesehen, das eine Verbindung zwischen dem Regelventil und einer der Kammern herstellt, während es die andere Kammer von dem Regelventil trennt. Durch ein Schalten des Kammerauswahlventils ist es möglich, entweder die eine oder die andere Kammer gezielt mit Druck zu beaufschlagen, so dass die Bewegung der Kolbeneinheit in zwei entgegengesetzte Richtungen, jeweils gegen einen Gegendruck, steuerbar ist.

Vorzugsweise ist der Gegendruck konstant und hängt nicht von der Geschwindigkeit der Kolbeneinheit ab, mit der sich diese im Schaltzylinder bewegt. Es hat sich als zweckmäßig erwiesen, einen Gegendruck im Bereich von 2 - 6 bar vorzusehen. Vorzugsweise beträgt der Gegendruck 2,5 - 3,5 bar.

Die Ventilvorrichtung, die für den Gegendruck sorgt, kann ein Kugelsitzventil mit einer federbeaufschlagter Kugel aufweisen. In dem Kugelsitzventil wird die Kugel mit einer Federkraft gegen einen Kugelsitz gedrückt. Bei Überschreiten eines bestimmten Druckes wird die Kugel aus dem Kugelsitz gedrückt, wodurch sich das Ventil öffnet und ein Volumenstrom zwischen Kugelsitz und Kugel zugelassen wird. Durch eine geeignete Auswahl des Kugelsitzventils, insbesondere der Feder bzw. der Federvorspannung, lässt sich der gewünschte Wert für den Gegendruck einstellen.

In einem bevorzugten Ausführungsbeispiel ist eine Druckentspannungsvorrichtung vorgesehen, durch die der Gegendruck, der der Bewegung der Kolbeneinheit entgegenwirkt, unter den durch die Ventilvorrichtung vorgegebenen Wert sinkt. Durch die Druckentspannungsvorrichtung ist es daher möglich, den Druck in der vom Regelventil getrennten Kammer zumindest in Grenzen zu reduzieren, obgleich ein konstanter Wert für den Gegendruck durch beispielsweise die Verwendung eines federbeaufschlagten Kugelsitzventils vorgegeben ist.

Vorzugsweise ist die Druckentspannungsvorrichtung derart ausgelegt, dass bei vergleichsweise kleinen Geschwindigkeiten der Kolbeneinheit der Gegendruck unter den von der Ventilvorrichtung vorgegebenen Wert sinkt. Durch eine derartige Auslegung der Druckentspannungsvorrichtung wird dem Umstand Rechnung getragen, dass beim Einlegen eines Ganges die Schaltgabel mit einer vergleichsweise hohen Geschwindigkeit, jedoch mit einer niedrigen Stellkraft aus einer Neutralstellung bis zum Synchronisationspunkt oder -bereich bewegt wird, anschließend das Synchronisieren mit hoher Stellkraft und praktisch verschwindender Stellgeschwindigkeit durchgeführt wird und schließlich nach erreichtem Synchronlauf das Schließen einer Klauenkupplung der Gangschaltkupplung mit moderater Stellgeschwindigkeit und geringer Stellkraft erfolgt. In der Phase der höchsten Stellkraft ist die Geschwindigkeit der Kolbeneinheit daher praktisch gleich Null, so dass durch die Druckentspannungsvorrichtung der Druck in der vom Regelventil getrennten Kammer unter den voreingestellten Wert fällt. Somit kann der Druck, der in der mit dem Regelventil verbundenen Kammer herrscht, in einem größeren Maße für die Synchronisation genutzt werden, wodurch der maximal bereitzustellende Druck des Regelventils geringer ausfällt als bei einem Ausführungsbeispiel, bei dem der Gegendruck nicht abgesenkt wird.

Vorzugsweise weist die Druckentspannungsvorrichtung eine Blende auf. Die Blende lässt einen gewissen Volumenstrom zu, wodurch bei praktisch unverändertem Volumen bzw. bei kleinen Volumenänderungen der Kammer der dortige Druck abfällt.

Somit führt die Druckentspannungsvorrichtung nur zu einer merklichen Druckreduzierung, wenn die Geschwindigkeit der Kolbeneinheit vergleichsweise klein ist. Im übrigen sei darauf hingewiesen, dass die Druckentspannungsvorrichtung auch durch eine geeignete Auswahl von Kolbeneinheit und Schaltzylinder bzw. von den dazwischen angeordneten Abdichtmitteln verwirklicht werden kann. In diesem Fall würde eine Leckage zwischen einer Zylinderwand des Schaltzylinders und der Kolbeneinheit ebenfalls zu einer Druckentspannung führen, wenn die Kolbengeschwindigkeit der Kolbeneinheit vergleichsweise gering ist und schon ein kleiner Volumenstrom ausreicht, den Druck zu reduzieren.

Die Steuerungsvorrichtung kann einen weiteren Schaltzylinder für eine weitere Schaltgabel aufweisen, wobei zweckmäßigerweise ein Zylinderauswahlventil vorgesehen ist, durch das eine Verbindung zwischen Regelventil und einen der Schaltzylinder herstellbar ist, während es den anderen Schaltzylinder vom Regelventil trennt. Durch ein derartiges Zylinderauswahlventil lassen sich zwei Schaltzylinder bzw. mehrere Schaltzylinder weiterhin mit nur einem Regelventil ansteuern. Auch ist es möglich, dem Zylinderauswahlventil ein weiteres Auswahlventil vorzuschalten, um mehrere Schaltzylinder, beispielsweise vier Schaltzylinder, mit nur einem Regelventil anzu steuern.

Vorzugsweise sind beide Kammern des vom Regelventil getrennten Schaltzylinders mit der Ventilvorrichtung verbunden, so dass bei Beaufschlagung einer Kammer des mit dem Regelventil verbundenen Schaltzylinders alle übrigen Kammern mit der Ventilvorrichtung verbunden sind. Durch eine derartige Schaltung wird sichergestellt, dass alle Schaltzylinder ständig mit Öl befüllt sind und keine Luft aufnehmen können.

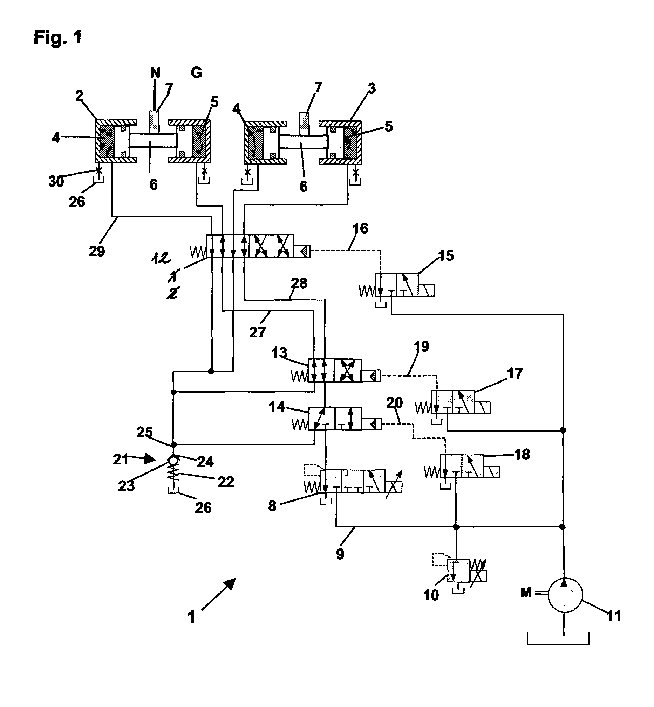

Anhand eines in der Figur 1 gezeigten Ausführungsbeispiels wird die Erfindung näher erläutert.

Figur 1 zeigt eine hydraulische Schaltvorrichtung, die in ihrer Gesamtheit mit 1 bezeichnet wird. Die hydraulische Schaltvorrichtung 1 umfasst einen ersten Schaltzylinder (oder Schaltaktuator) 2 und einen zweiten Schaltzylinder 3. Jeder der beiden Schaltzylinder 2, 3 ist als doppelt wirkender Schaltzylinder mit einer ersten Kammer 4 und einer zweiten Kammer 5 ausgebildet. Zwischen der ersten Kammer 4 und der zweiten Kammer 5 ist eine Kolbeneinheit 6 angeordnet. Mit der Kolbeneinheit 6 verbunden ist eine in der Figur 1 nur schematisch dargestellte Schaltgabel 7.

Die Kolbeneinheit 6 mit der Schaltgabel 7 lässt sich in einem Schaltzylinders 2, 3 betätigen, indem entweder die erste Kammer 4 oder die zweite Kammer 5 mit Druck beaufschlagt wird. Wird beispielsweise die zweite Kammer 5 des zweiten Schaltzylinders 3 mit Druck beaufschlagt, bewegt sich die zugehörige Kolbeneinheit 6 in der Darstellung der Figur 1 nach links, wodurch das Volumen der zugehörigen ersten Kammer 4 kleiner wird. Dabei wird das in dieser Kammer befindliche Öl herausgedrückt.

Zur geregelten Beaufschlagung der einzelnen Kammern 4, 5 ist ein als Druckregler ausgebildetes Regelventil 8 vorgesehen. Der Druckregler 8 ist eingangsseitig über eine Leitung 9 mit einen Hauptdruckregler 10 und einer motor-betriebenen Ölpumpe 11 verbunden.

Zwischen den Kammern 4, 5 der Schaltzylinder 2, 3 und dem Druckregler 8 sind ein Kammerauswahlventil 12, ein Zylinderauswahlventil 13 und ein Aktivierungsventil 14 geschaltet. Die Ventile 12, 13, 14 sind in der Figur 1 jeweils in ihrer federbeaufschlagten Ruhestellung gezeigt. Dem Kammerauswahlventil 12 ist ein Vorschaltventil 15 zugeordnet, das elektro-magnetisch betätigbar ist und in angeregter Stellung einen Steuerdruck über die Signalleitung 16 auf das Kammerauswahlventil 12 schaltet. Der dann anliegende Steuerdruck bewirkt, dass das Kammerauswahlventil 12 von der Ruhestellung in eine zweite Stellung schaltet. In analoger Weise sind dem Zylinderauswahlventil 13 ein Vorschaltventil 17 und dem Aktivierungsventil 14 ein Vorschaltventil 18 zugeordnet, die über jeweilige Signalleitungen 19, 20 mit den Ventilen 13, 14 verbunden sind. Wie auch das Kammerauswahlventil 12 lassen sich das Zylinderauswahlventil 13 und das Aktivierungsventil 14 durch einen geeigneten Steuerdruck in eine jeweils zweite Stellung schalten.

Des weiteren ist in der Steuerungsvorrichtung 1 eine Ventilvorrichtung mit einem Kugelsitzventil 21 vorgesehen. Beim Kugelsitzventil 21 drückt eine Feder 22 eine Kugel 23 gegen einen Kugelsitz 24, wodurch das Kugelsitzventil 21 geschlossen ist. Ab einem bestimmten Druck am Ventileingang 25 wird die Kugel 23 gegen die Kraft der Feder 22 aus dem Kugelsitz gedrückt. Das Kugelsitzventil 21 öffnet sich und lässt einen Strom zwischen dem Ventileingang 25 und einem Ölsumpf 26 zu.

Über das Kammerauswahlventil 12, das Zylinderauswahlventil 13, das Aktivierungsventil 14 und einem aus mehreren Leitungen bestehenden Leitungssystem lässt sich der Ventileingang 25 des Kugelsitzventils mit den Kammern 4, 5 beider Schaltzylinder 2, 3 verbinden. In dem in der Fig. 1 gezeigten Schaltungszustand sind alle Kammern 2, 3 mit dem Ventileingang des Kugelsitzventils 21 verbunden, so dass ein Ölstrom aus einer dieser Kammern durch das Kugelsitzventil 21 in den Ölsumpf 26 nur möglich ist, wenn der entsprechende Kammerdruck größer als der Druck ist, durch den die Kugel 23 in ihren Kugelsitz 24 gedrückt wird. Dieser Schaltungszustand stellt sicher, dass auch bei einer Nichtnutzung der Schaltzylinder die einzelnen Kammern mit ÖI befüllt sind, so dass sie keine Luft aufnehmen können.

Um beispielsweise die erste Kammer 4 des ersten Schaltzylinders 2 mit dem Druckregler 8 zu verbinden, um die dortige Kolbeneinheit 6 zu betätigen und somit über die Schaltgabel 7 einen Gang G einzulegen, wird das Aktivierungsventil 14 in dessen zweite Stellung gebracht, so dass zunächst eine Verbindung zwischen Zylinderauswahlventil 13 und Druckregler 8 hergestellt ist. In der zweiten Stellung des Aktivierungsventils 14 wird zudem eine über das Aktivierungsventil 14 führende Verbindung zwischen Kugelsitzventil 21 und Zylinderauswahlventil 13 getrennt.

Des weiteren wird das Zylinderauswahlventil 13 aus dessen Ruhestellung geschaltet, so dass der modellierte Druck des Druckreglers 8 auf eine Leitung 27 gelegt wird. Diese Leitung 27 verbindet neben einer Leitung 28 das Zylinderauswahlventil 13 mit dem Kammerauswahlventil 12. Um schließlich die Leitung 27 mit einer Leitung 29 zu verbinden, die von dem Kammerauswahlventil 12 zur ersten Kammer 4 des ersten Schaltzylinders 2 führt, muss das Kammerauswahlventil 12 in dessen zweite Stellung geschaltet werden. Nun ist eine Verbindung zwischen der betreffenden Kammer und dem Druckregler 8 hergestellt, so dass die Kammer mit Öl befüllt werden kann und die Kolbeneinheit sich in der Darstellung der Figur 1 entsprechend nach rechts bewegt. Alle übrigen Kammern sind trotz der durchgeführten Schaltungen weiterhin mit dem Kugelsitzventil 21 verbunden. Dies gilt auch für die zweite Kammer 5 des ersten Schaltzylinders 2, so dass der Bewegung der Kolbeneinheit 6 ein gewisser Gegendruck entgegensteht.

Der ersten und zweiten Kammer 4, 5 jedes Schaltzylinders 2, 3 ist jeweils eine Druckentspannungsvorrichtung zugeordnet, die eine Blende 30 aufweist. Die Blende 30 lässt einen geringen Volumenstrom zwischen einer Kammer und dem Ölsumpf 26 zu.

Beim Einlegen des Ganges G durch den ersten Schaltzylinder 2 wird die Schaltgabel 7 aus einer in der Fig. 1 dargestellten Neutralstellung N zunächst mit hoher Geschwindigkeit an einen Synchronisationspunkt bzw. -bereich herangeführt, was nur wenig Stellkraft erfordert. Im Synchronisationsbereich hingegen wird bei praktisch stillstehender Kolbeneinheit 7 eine große Stellkraft benötigt. Nach der Synchronisation, dh. nach Durchfahren des Synchronisationsbereiches, wird die Schaltgabel wieder mit erhöhter Geschwindigkeit, aber wiederum mit geringer Stellkraft bewegt, bis eine dem Gang G zugeordnete Gangschaltkupplung vollständig geschlossen ist.

Beim Schalten des Ganges G muss daher in der ersten Kammer 4 des ersten Schaltzylinders 2 ein Druck aufgebaut werden und somit eine Kraft erzeugt werden, durch die die Haltreibung zwischen Kolbeneinheit 6 und Schaltzylinder 2 überwunden, der Gegendruck in der zweiten Kammer 5 kompensiert und die benötigte Stellkraft für die Schaltgabel 7 bereitgestellt wird. Setzt sich die Kolbeneinheit 6 in Bewegung, fällt die zu überwindende Reibung von der Haftreibung auf eine geringere Gleitreibung ab, wodurch die insgesamt bereitzustellende Kraft bzw. der bereitzustellende Druck in der ersten Kammer schlagartig kleiner wird. Der weiterhin vorliegende Gegendruck verhindert jedoch, dass die Kolbeneinheit beim Übergang von Haft- zur Gleitreibung ruckelt und ermöglicht eine bessere Regelbarkeit der Bewegung der Kolbeneinheit.

Im Synchronisationsbereich wird eine große Stellkraft benötigt. Da die Geschwindigkeit der Kolbeneinheit 6 hier sehr klein oder Null ist, kann sich über die Blende 30 bei praktisch unverändertem Volumen der zweiten Kammer 5 der dort herrschende Druck abbauen. Der (Gegen-)Druck fällt dabei deutlich unter den durch das Kugelsitzventil 21 vorgegebenen Druck, so dass der Druck des Regelventils 8, abgesehen von der Reibung, in dieser Phase ausschließlich für die Bereitstellung einer hohen Stellkraft verwendet werden kann. Daher ist es trotz eingestelltem Gegendruck nicht notwendig, im Hinblick auf die notwendige Stellkraft bei der Synchronisation den Maximalwert für den modellierten Druck zu erhöhen.

### Bezugszeichenliste

- 1: Hydraulische Schaltvorrichtung
- 2: Erster Schaltzylinder
- 3: Zweiter Schaltzylinder
- 4: Erste Kammer
- 5: Zweite Kammer
- 6: Kolbeneinheit
- 7: Schaltgabel
- 8: Regelventil
- 9: Leitung
- 10: Hauptdruckregler
- 11: Pumpe
- 12: Kammerauswahlventil
- 13: Zylinderauswahlventil
- 14: Aktivierungsventil
- 15: Vorschaltventil
- 16: Steuerleitung
- 17: Vorschaltventil
- 18: Vorschaltventil
- 19: Signalleitung
- 20: Signalleitung
- 21: Kugelsitzventil
- 22: Feder
- 23: Kugel
- 24: Kugelsitz
- 25: Ventileingang
- 26: Ölsumpf
- 27: Leitung
- 28: Leitung
- 29: Leitung
- 30: Blende
- G: Gang
- N: Neutralstellung

## Patentansprüche

1. Hydraulische Steuerungsvorrichtung (1) für eine Schaltgabel (7) zum Einlegen/Auslegen wenigstens eines Ganges (G) in einem Schaltgetriebe, umfassend:
- wenigstens einen Schaltzylinder (2, 3) und eine im Schaltzylinder (2, 3) bewegbare Kolbeneinheit (6), die mit der Schaltgabel (7) verbunden ist, wobei der Schaltzylinder als doppelt-wirkender Schaltzylinder (2, 3) mit zwei Kammern (4, 5) ausgebildet ist; und
- wenigstens ein Regelventil (8) zum Erzeugen eines modellierten Druckes, mit dem die Kolbeneinheit (6) beaufschlagbar ist, um die Schaltgabel (7) zu betätigen,
**dadurch gekennzeichnet, dass** eine Ventilvorrichtung für einen Gegendruck sorgt, der der Bewegung der Kolbeneinheit (6) entgegenwirkt, wobei jeweils eine Kammer mit dem modellierten Druck beaufschlagbar ist, während für die jeweils andere Kammer die Ventilvorrichtung den Gegendruck vorgibt.

2. Steuerungsvorrichtung (1) nach Anspruch 1, **dadurch gekennzeichnet, dass** ein Kammerauswahlventil (12) vorgesehen ist, das eine Verbindung zwischen dem Regelventil (8) und einer der Kammern (4, 5) herstellt, während es die andere Kammer (5, 4) vom Regelventil (8) trennt.

3. Steuerungsvorrichtung (1) nach Anspruche 1 oder 2, **dadurch gekennzeichnet, dass** die Ventilvorrichtung einen Maximalwert für den Gegendruck vorgibt.

4. Steuerungsvorrichtung (1) nach Anspruch 3, **dadurch gekennzeichnet, dass** der Maximalwert für den Gegendruck 0,25 bis 3 bar, vorzugsweise 0,5 bis 1,5 bar beträgt.

5. Steuerungsvorrichtung (1) nach einem der Ansprüche 1 bis 4, **dadurch gekennzeichnet, dass** die Ventilvorrichtung ein Kugelsitzventil (21) mit federbeaufschlagter Kugel (23) aufweist.

6. Steuerungsvorrichtung (1) nach einem Ansprüche 1 bis 5, **dadurch gekennzeichnet, dass** eine Druckentspannungsvorrichtung vorgesehen ist, durch die der Gegendruck, der der Bewegung der Kolbeneinheit (6) entgegenwirkt, unter den durch die Ventilvorrichtung vorgegebenen Wert sinkt.

7. Steuerungsvorrichtung (1) nach Anspruch 6, **dadurch gekennzeichnet, dass** die Druckentspannungsvorrichtung wenigstens eine Blende (30) aufweist.

8. Steuerungsvorrichtung (1) nach einem der Ansprüche 1 bis 7, **dadurch gekennzeichnet, dass** ein weiterer Schaltzylinder (3) für eine weitere Schaltgabel und ein Zylinderauswahlventil (13) vorgesehen ist, durch das eine Verbindung zwischen Regelventil (8) und einen der Schaltzylinder (2, 3) herstellbar ist, während es den anderen Schaltzylinder (3, 2) vom Regelventil (8) trennt.

9. Steuerungsvorrichtung (1) nach einem der Ansprüche 1 bis 8, **dadurch gekennzeichnet, dass** beide Kammern (4, 5) des vom Regelventil (8) getrennten Schaltzylinders mit der Ventilvorrichtung verbunden sind.

## Claims

1. Hydraulic control apparatus (1) for a shifting fork (7) for engaging/releasing at least one gear (G) in a manual transmission, comprising:
- at least one shifting cylinder (2, 3) and a piston unit (6) which can move within the shifting cylinder (2, 3) and is connected to the shifting fork (7), the shifting cylinder being designed as a double-acting shifting cylinder (2, 3) with two chambers (4, 5); and
- at least one control valve (8) for generating a modeled pressure which can be applied to the piston unit (6) in order to actuate the shifting fork (7),
**characterized in that** a valve apparatus provides a counter-pressure which counteracts the movement of the piston unit (6), it being possible for the modeled pressure to be applied to in each case one chamber, while the valve apparatus presets the counter-pressure for the in each case other chamber.

2. Control apparatus (1) according to Claim 1, **characterized in that** a chamber selector valve (12) is provided, which produces a connection between the control valve (8) and one of the chambers (4, 5) while disconnecting the other chamber (5, 4) from the control valve (8).

3. Control apparatus (1) according to Claims 1 or 2, **characterized in that** the valve apparatus presets a maximum value for the counter-pressure.

4. Control apparatus (1) according to Claim 3, **characterized in that** the maximum value for the counter-pressure is from 0.25 to 3 bar, preferably 0.5 to 1.5 bar.

5. Control apparatus (1) according to one of Claims 1 to 4, **characterized in that** the valve apparatus has a ball seat valve (21) with spring-loaded ball (23).

6. Control apparatus (1) according to one of Claims 1 to 5, **characterized in that** a pressure relief apparatus is provided, by means of which the counter-pressure which counteracts the movement of the piston unit (6) is made to drop below the value predetermined by the valve apparatus.

7. Control apparatus (1) according to Claim 6, **characterized in that** the pressure relief apparatus has at least one diaphragm (30).

8. Control apparatus (1) according to one of Claims 1 to 7, **characterized in that** a further shifting cylinder (3) is provided for a further shifting fork and a cylinder selector valve (13), which can be used to produce a connection between control valve (8) and one of the shifting cylinders (2, 3) while disconnecting the other shifting cylinder (3, 2) from the control valve (8).

9. Control apparatus (1) according to one of Claims 1 to 8, **characterized in that** the two chambers (4, 5) of the shifting cylinder that is disconnected from the control valve (8) are connected to the valve apparatus.

## Revendications

1. Dispositif de commande hydraulique (1) pour une fourchette de boîte de vitesses (7) pour engager/dégager au moins un rapport (G) dans une boîte de vitesses, comprenant:
- au moins un cylindre de boîte de vitesses (2, 3) et une unité de piston (6) mobile dans le cylindre de boîte de vitesses (2, 3), qui est reliée à la fourchette de boîte de vitesses (7), dans lequel le cylindre de boîte de vitesses est un cylindre de boîte de vitesses à double action (2, 3) avec deux chambres (4, 5), et
- au moins une soupape de régulation (8) pour produire une pression modélisée, à laquelle l'unité de piston (6) peut être soumise, pour actionner la fourchette de boîte de vitesses (7),
**caractérisé en ce qu'**un dispositif de soupapes produit une contre-pression, qui s'oppose au mouvement de l'unité de piston (6), dans lequel une chambre peut être soumise respectivement à la pression modélisée, tandis que le dispositif de soupapes prédétermine la contre-pression pour l'autre chambre respective.

2. Dispositif de commande (1) selon la revendication 1, **caractérisé en ce qu'**il est prévu une soupape de sélection de chambre (12), qui établit une communication entre la soupape de régulation (8) et une des chambres (4, 5), tandis qu'elle sépare l'autre chambre (5, 4) de la soupape de régulation (8).

3. Dispositif de commande (1) selon la revendication 1 ou 2, **caractérisé en ce que** le dispositif de soupapes prédétermine une valeur maximale pour la contre-pression.

4. Dispositif de commande (1) selon la revendication 3, **caractérisé en ce que** la valeur maximale pour la contre-pression vaut de 0,25 à 3 bar, de préférence de 0,5 à 1,5 bar.

5. Dispositif de commande (1) selon l'une quelconque des revendications 1 à 4, **caractérisé en ce que** le dispositif de soupapes présente une soupape à siège sphérique (21) avec une bille commandée par ressort (23).

6. Dispositif de commande (1) selon l'une quelconque des revendications 1 à 5, **caractérisé en ce qu'**il est prévu un dispositif de détente de pression, à travers lequel la contre-pression, qui s'oppose au mouvement de l'unité de piston (6), descend en dessous de la valeur prédéterminée par le dispositif de soupapes.

7. Dispositif de commande (1) selon la revendication 6, **caractérisé en ce que** le dispositif de détente de pression présente au moins un obturateur (30).

8. Dispositif de commande (1) selon l'une quelconque des revendications 1 à 7, **caractérisé en ce qu'**il est prévu un autre cylindre de boîte de vitesses (3) pour une autre fourchette de boîte de vitesses et une soupape de sélection de cylindre (13), par laquelle une communication peut être établie entre la soupape de régulation (8) et un des cylindres de boîte de vitesses (2, 3), tandis qu'elle sépare l'autre cylindre de boîte de vitesses (3,2) de la soupape de régulation (8).

9. Dispositif de commande (1) selon l'une quelconque des revendications 1 à 8, **caractérisé en ce que** les deux chambres (4, 5) du cylindre de boîte de vitesses séparé de la soupape de régulation (8) sont en communication avec le dispositif de soupapes.
